# EUROPEAN PATENT APPLICATION

(11) **EP 2 667 356 A2**
(43) Date of publication of application: **27.11.2013**
(21) Application number: 12187684.1
(22) Date of filing: 08.10.2012
(51) Int. Cl.: G06T 11/00

(54) **Information distribution apparatus, information distribution system and information distribution method**

(30) Priority: 21.05.2012 JP 2012115396
(71) Applicant: Kabushiki Kaisha Toshiba, Tokyo 105-8001 (JP)
(72) Inventor: Irie, Yuji, Tokyo, 105-8001 (JP); Ohmori, Yoshihiro, Tokyo, 105-8001 (JP)
(74) Representative: Henkel, Breuer & Partner

(57) **Abstract**

According to one embodiment, an information distribution apparatus includes a receiver (1051), an obtaining module (1012), a determination module (1013), and a transmitter (1052). The receiver (1051) receives a request for an application from an electronic apparatus (30). The obtaining module (1012) obtains identification information from the request. The determination module (1013) determines whether the identification information is included in a list. The transmitter (1052) transmits the application, in which a test script configured to detect distortion of screen display of the application is not embedded, to the electronic apparatus (30), if the identification information is included in the list.

## Description

Embodiments described herein relate generally to an information distribution apparatus, an information distribution system, and an information distribution method, which distribute applications to electronic apparatuses.

In recent years, electronic apparatuses have come to obtain applications from a server through a network. Generally, such applications are configured to operate on electronic apparatuses regardless of the type of the electronic apparatuses (not only device type such as a television, mobile phone, and smart phones, but also model number type).

Electronic apparatuses of different types have different screen sizes and different equipped rendering engines. For example, televisions and mobile phones have different screen sizes and the like. There are cases where mobile phones of different model numbers have different screen sizes. In this case, if electronic apparatuses of different types start the same application, the electronic apparatuses include electronic apparatuses in which the application is normally displayed, and electronic apparatuses in which the application is not normally displayed (application display is distorted).

Distributors of applications can take measures by checking the display states of the applications for all the electronic apparatuses of different types. The measures are not realistic, however, in consideration of the number of types of electronic apparatuses.

A general architecture that implements the various features of the embodiments will now be described with reference to the drawings. The drawings and the associated descriptions are provided to illustrate the embodiments and not to limit the scope of the invention.
FIG. 1 is an exemplary diagram illustrating an outline of an information distribution system according to an embodiment.
FIG. 2 is an exemplary block diagram illustrating a configuration of the information distribution system according to the embodiment.
FIG. 3 is an exemplary sequence diagram illustrating a flow of processing performed by an information distribution apparatus and a television according to the embodiment.
FIG. 4 is an exemplary diagram illustrating error information according to the embodiment.
FIGS. 5A and 5B are exemplary diagrams of screens according to the embodiment.

Various embodiments will be described hereinafter with reference to the accompanying drawings.

In general, according to one embodiment, an information distribution apparatus includes a receiver, an obtaining module, a determination module, and a transmitter. The receiver is configured to receive a request for an application from an electronic apparatus. The obtaining module is configured to obtain identification information of the electronic apparatus from the request. The determination module is configured to determine whether the identification information of the electronic apparatus is included in a list. The transmitter is configured to transmit the application, in which a test script configured to detect distortion of screen display of the application is not embedded, to the electronic apparatus, if the identification information of the electronic apparatus is included in the list.

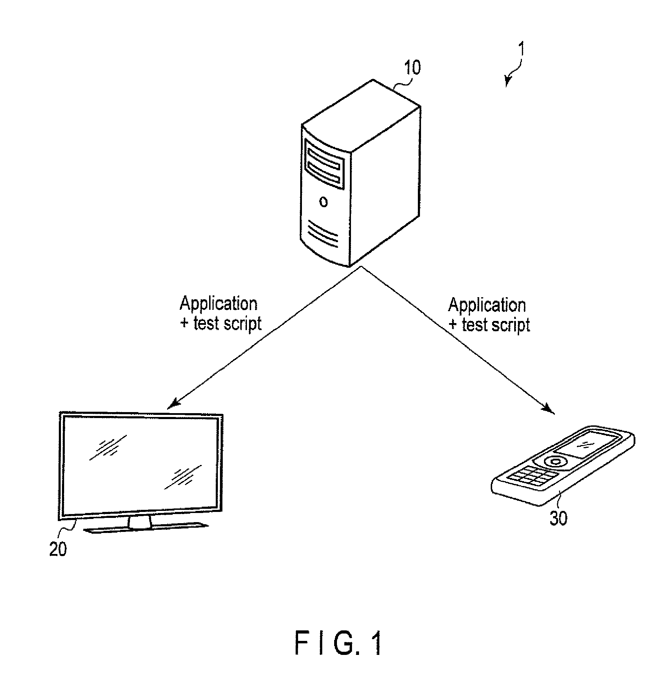

An embodiment will be explained hereinafter with reference to drawings. FIG. 1 is a diagram illustrating an outline of an information distribution system 1 according to a first embodiment. The information distribution system 1 comprises an information distribution apparatus 10, a television (display apparatus) 20, and a mobile terminal 30. The information distribution apparatus 10 is a server which distributes an application to the television 20 and the mobile terminal 30. The information distribution apparatus 10 distributes, to the television 20 and the mobile terminal 30, one of an application in which a test script to detect distortion (error, disorder) of screen display of the application is embedded and an application in which no test script is embedded, based on a predetermined condition as described later.

The television 20 is an electronic apparatus which can be connected to the information distribution apparatus 10 through a wired network. The television 20 receives an application which is distributed from the information distribution apparatus 10, starts the application, and displays the application on the screen. Although the present embodiment is explained with an example of the television 20, the electronic apparatus is not limited to it. Any electronic apparatus can be used as long as it can receive an application from the information distribution apparatus 10 through a wired network.

The mobile terminal 30 is an electronic apparatus which can be connected to the information distribution apparatus 10 through a wireless network. The mobile terminal 30 receives an application which is distributed from the information distribution apparatus 10, starts the application, and displays the application on the screen. Although the present embodiment is explained with an example of the mobile terminal 30, the electronic apparatus is not limited to it. Any electronic apparatus can be used as long as it can receive an application from the information distribution apparatus 10 through a wireless network.

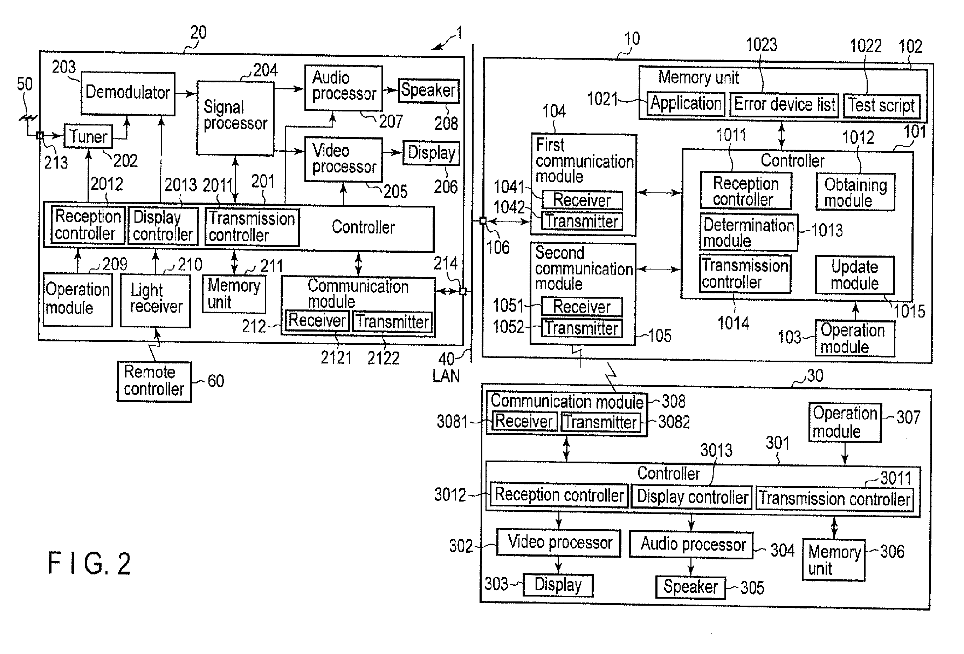

FIG. 2 is a block diagram illustrating a configuration of the information distribution system 1 according to the embodiment. The configuration of the information distribution apparatus 10 will be explained hereinafter. The information distribution apparatus 10 includes a controller 101, a memory unit 102, an operation module 103, a first communication module 104, and a second communication module 105.

The controller 101 controls operation of constituent elements of the information distribution apparatus 10. The controller 101 includes various modules (functions) as described later. The memory 102 stores various information items. The memory unit 102 includes a memory which stores a control program that is executed by the controller 101. The memory unit 102 also includes a memory which provides the controller 101 with a work area. In the present embodiment, the memory unit 102 includes an application 1021, a test script 1022, and an error device list 1023. The application 1021 is an application (data) which is distributed to the television 20 and the mobile terminal 30. Although the application 1021 is not limited, the application 1021 is, for example, an application which is described in HTML (Hypertext Markup Language). As a more specific example, the application 1021 is an application which is described in HTML5. The test script 1022 is a script (data) which is embedded (or included, described) in the application 1021 according to a predetermined condition. The error device list 1023 is a list which registers information of devices in which screen display of the application 1021 is distorted.

The operation module 103 is an interface which enables input by the information distribution apparatus 10. The operation module 103 is, for example, a keyboard and/or a touch panel.

The first communication module 104 is connected with a LAN 40 through a LAN (Local Area Network) terminal 106. The first communication module 104 communicates with the television 20 through a wired network. The first communication module 104 includes a receiver 1041 which receives information from the television 20, and a transmitter 1042 which transmits information to the television 20.

The second communication module 105 communicates with the mobile terminal 30 through a wireless network. The second communication module 105 includes a receiver 1051 which receives information from the mobile terminal 30, and a transmitter 1052 which transmits information to the mobile terminal 30.

Next, the configuration of the television 20 will be explained hereinafter. The television 20 includes a controller 201, a tuner 202, a demodulator 203, a signal processor 204, a video processor 205, a display 206, an audio processor 207, a speaker 208, an operation module 209, a light-receiver 210, a memory unit 211, and a communication module 212.

The controller 201 controls operation of constituent elements of the television 20. The controller 201 includes various modules (functions) as described later.

The tuner 202 receives broadcasting signals received by an antenna 50 through an input terminal 213. The tuner 202 outputs a selected broadcasting signal to the demodulator 203.

The demodulator 203 demodulates the broadcasting signal into a digital video (image) signal and a digital sound signal. The demodulator 203 outputs the digital video signal and the digital audio signal to the signal processor 204.

The signal processor 204 performs predetermined digital signal processing for the digital video signal and the digital audio signal which are supplied from the demodulator 203, and outputs the digital video signal and the digital audio signal to the image processor 205 and the audio processor 207, respectively.

The video processor 205 converts the digital video signal into an video signal of a format which can be displayed by the display 206. The video processor 205 outputs the video signal to the display 206.

The display 206 displays a video based on the video signal.

The audio processor 207 converts the digital audio signal which is supplied from the signal processor 204 into an audio signal of a format which can be played back by the speaker 208. The audio processor 207 outputs the audio signal to the speaker 208.

The speaker 208 outputs audio based on the audio signal.

The video processor 205 and the audio processor 207 not only process signals based on the broadcasting signal, but also process signals based on various applications, based on control by the controller 201. In this case, the display 206 displays images based on the applications. The speaker 208 outputs sound based on the applications.

The operation module 209 is an interface which receives user operations.

The light-receiver 210 receives signals of user operations which are performed by a remote controller 60. User operations received by the operation module 209 or user operations received by the light-receiver 210 are reflected on the constituent elements by the controller 201.

The memory unit 211 stores various information items. The memory unit 211 includes a memory which stores a control program that is executed by the controller 201. The memory unit 211 also includes a memory which provides the controller 201 with a work area.

The communication module 212 is connected to the LAN 40 through a LAN terminal 214. The communication module 212 communicates with the information distribution apparatus 10 through a wired network. The communication module 212 includes a receiver 2121 which receives information from the information distribution apparatus 10, and a transmitter 2122 which transmits information to the information distribution apparatus 10.

Next, the configuration of the mobile terminal 30 will be explained hereinafter. The mobile terminal 30 includes a controller 301, a video processor 302, a display 303, an audio processor 304, a speaker 305, a memory unit 306, an operation module 307, and a communication module 308.

The controller 301 controls operation of constituent elements of the mobile terminal 30. The controller 301 includes various modules (functions) as described later.

The video processor 302 converts an video signal which is based on the application into a video signal of a format which can be displayed by the display 303. The video processor 302 outputs the video signal to the display 303.

The display 303 displays a video based on the image signal.

The audio processor 304 converts an audio signal which is based on the application into an audio signal of a format which can be played back by the speaker 305. The audio processor 304 outputs the audio signal to the speaker 305.

The speaker 305 outputs audio based on the audio signal.

The memory unit 306 stores various information items. The memory unit 306 includes a memory which stores a control program that is executed by the controller 301. The memory unit 306 also includes a memory which provides the controller 301 with a work area.

The operation module 307 is an interface which receives user operations. The operation module 307 is, for example, hard keys and/or touch panel. User operations received by the operation module 207 are reflected on the constituent elements by the controller 301.

The communication module 308 communicates with the information distribution apparatus 10 through a wireless network. The communication module 308 includes a receiver 3081 which receives information from the information distribution apparatus 10, and a transmitter 3082 which transmits information to the information distribution apparatus 10.

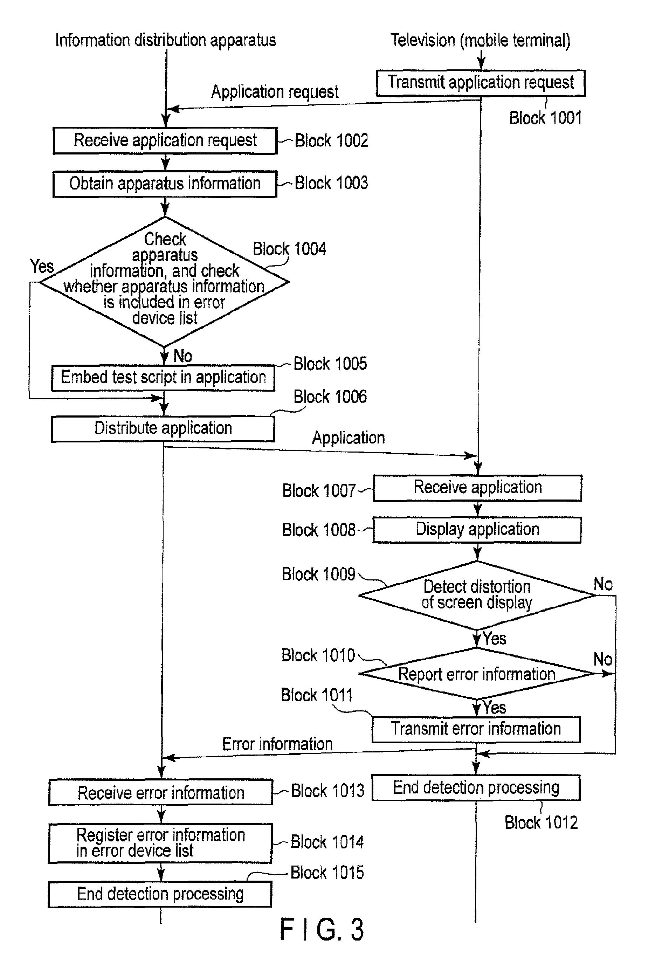

Next, processing of distributing the application 1021 by the information distribution apparatus 10 will be explained hereinafter. FIG. 3 is a sequence diagram which illustrates a flow of processing performed by the information distribution apparatus 10 and processing performed by the television 20.

First, the television 20 transmits a request for the application 1021 (hereinafter also referred to as "application request") to the information distribution apparatus 10 (Block 1001). In Block 1001, the controller 201 (transmission controller 2011) performs control to cause the communication module 212 (transmitter 2122) to transmit the application request to the information distribution apparatus 10.

The information distribution apparatus 10 receives the application request from the television 20 (Block 1002). In Block 1002, the controller 101 (reception controller 1011) performs control to cause the first communication module 104 (receiver 1041) to receive the application request from the television 20.

The information distribution apparatus 10 obtains apparatus information from the application request (Block 1003). In Block 1003, the controller 101 (obtaining module 1012) obtains apparatus information (identification information of the television 20) relating to the television 20 from a user-agent header of an HTTP (Hypertext Transfer Protocol) request included in the application request. The controller 101 (obtaining module 1012) obtains at least a device name (model number) which is peculiar to the apparatus, as the apparatus information. The controller 1001 (obtaining module 1012) may obtain at least one of a browser name and a browser version, together with or instead of the device name. After the device name is obtained, the controller 101 can obtain the browser name and the browser version through the Internet, with the device name used as a search key.

The information distribution apparatus 10 checks the apparatus information, and checks whether the apparatus information is included in the error device list 1023 (Block 1004). In Block 1004, the controller 101 (determination module 1013) determines whether the device name (or browser name or browser version) of the television 20 is included (registered) in the error device list 1023 or not. Then, the controller 101 (determination module 1013) determines whether the test script 1022 is to be embedded in the application 1021 or not, based on a result of comparing the received apparatus information with the error device list 1023 stored in the memory unit 102.

If the apparatus information is not included in the error device list 1023 (Block 1004, No), the information distribution apparatus 10 performs control to embed the test script 1022 in the application 1021 (Block 1005). In Block 1005, the controller 101 performs control to embed the test script 1022 in the application 1021 which is to be distributed to the television 20. The information distribution apparatus 10 distributes the application 1021, in which the test script 1022 is embedded, to the television 20 (Block 1006). In Block 1006, the controller 101 (transmission controller 1014) performs control to cause the first communication module 104 (transmitter 1042) to distribute (transmit) the application 1021 in which the test script 1022 is embedded to the television 20.

If the apparatus information is included in the error device list 1023 (Block 1004, Yes), the information distribution apparatus 10 distributes the application 1021 to the television 20 (Block 1006). In Block 1006, the controller 101 (transmission controller 1014) performs control to cause the first communication module 104 (transmitter 1042) to distribute (transmit) the application 1021, in which no test script 1022 is embedded, to the television 20. In other words, the controller 101 (transmission controller 1014) performs control to prevent the first communication module 104 (transmitter 1042) from distributing (transmitting) the test script to the television 20.

The television 20 receives the application 1021 from the information distribution apparatus 10 (Block 1007). In Block 1007, the controller 201 (reception controller 2012) performs control to cause the communication module 212 (receiver 2121) to receive the application 1021 from the information distribution apparatus 10.

The television 20 displays the application 1021 (Block 1008). In Block 1008, the controller 201 (display controller 2012) performs control to start (execute) the application 1021 and display an image based on the application 1021 on the display 206.

The television 20 detects distortion of the screen display (Block 1009). In Block 1009, if test script 1022 is embedded in the application 1021, the controller 201 detects distortion of the screen display of the application 1021 displayed on the display 106, based on the test script 1022. An example of the test script will be explained later.

If the controller 201 detects distortion of the screen display (Block 1009, Yes), the television 20 determines whether error information is reported to the information distribution apparatus 10 or not (Block 1010). In Block 1010, the controller 201 performs control to display information (referred to as "detection result" hereinafter) which indicates that distortion of screen display was detected on the display 106 and determines, based on user operation, whether error information which is information relating to distortion of screen display is to be reported or not.

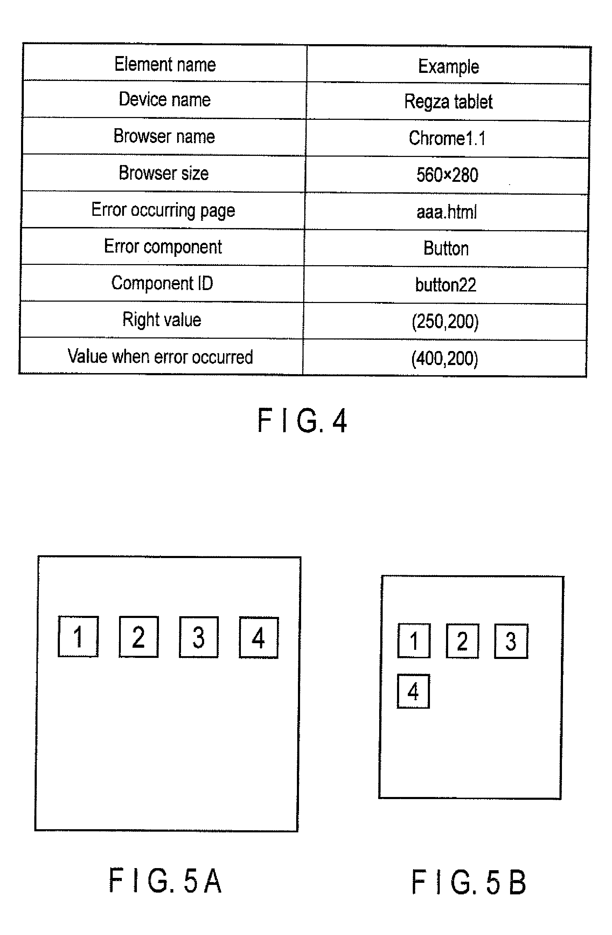

The error information will be explained hereinafter. FIG. 4 illustrates an error information list which serves as an example. The error information includes elements "device name", "browser name", "error occurring page", "error component", "component ID", "right value", and "value when error occurred". The element "device name" is a model number which is peculiar to the electronic apparatus. The element "browser name" is a version name of the browser which is used in the electronic apparatus. The element "browser size" is a size of the browser displayed by the electronic apparatus. The browser size may correspond to the screen size. The elements "device name", "browser name" and "browser size" are information which can serve as identification information. The element "error occurring page" indicates a page which relates to occurrence of distortion of screen display in the source code of the application 1021. The element "error component" indicates a component (element) (such as button and icon) which forms the screen display. The element "component ID" is a name of the component in which distortion of screen display occurred. The element "right value" indicates a position in which the component, in which distortion of screen display occurred, should originally be displayed. The element "value when error occurred" indicates a position in which the component, in which distortion of screen display occurred, is actually displayed. Specifically, the error information includes identification information of the electronic apparatus, and information relating to distortion of screen display of the application 1021. The elements of the error information are not limited to the elements illustrated in FIG. 4. In addition, not all the elements illustrated in FIG. 4 are indispensable for the error information.

With reference to FIG. 3 again, if controller 201 determines that it is necessary to report the error information (Block 1010, Yes), the television 20 transmits the error information to the information distribution apparatus 10 (Block 1011). In Block 1011, the controller 201 (transmission controller 2011) performs control to cause the communication module 212 (transmitter 2122) to transmit the error information to the information distribution apparatus 10. Thereafter, the controller 201 ends processing of detecting distortion of screen display. If distortion of screen display is detected (Block 1009, Yes), the controller 201 may transmit the error information to the information distribution apparatus 10 in Block 1011, without performing control to display a detection result on the display 206 (without performing processing of Block 1010).

If the controller 201 detects no distortion of screen display (including the case no test script 1022 is embedded in the application 1021) (Block 1009, No), and the controller 201 determines that it is unnecessary to report the error information (Block 1010, No), the controller 201 ends the processing of detecting distortion of screen display.

The information distribution apparatus 10 receives the error information from the television 20 (Block 1013). In Block 1013, the controller 101 (reception controller 1011) performs control to cause the first communication module 104 (receiver 1041) to receive the error information based on the test script 1022 from the television 20.

The information distribution apparatus 10 registers the error information in the error device list (Block 1014). In Block 1014, the controller 101 (update module 1015) performs control to additionally register (store) the error information (at least the device name included in the error information) in the error device list 1023, and update the error device list 1023. The memory unit 102 may register and store the information relating to distortion of screen display of the application 1021, which is included in the error information, in the error device list 1023 together with the device name, or store the information separately from the error device list 1023. Thereafter, the controller 101 ends the processing of detecting distortion of screen display.

The manager of the information distribution apparatus 10 can correct the application 1021 by referring to the error information. Specifically, the manager of the information distribution apparatus 10 can prepare the application 1021 which is corrected in accordance with the device name of the electronic apparatus which has transmitted the error information. The memory unit 102 stores not only the application 1021 in the initial state but also the corrected application 1021, even if they are the same applications. Therefore, the controller 101 may distribute the corrected application with priority over the application in the initial state, in accordance with the device name of the electronic apparatus which has transmitted an application request.

Although the processing performed by the television 20 has been explained with reference to FIG. 3, the processing performed by the mobile terminal 30 is the same as the processing performed by the television 20. The controller 301 of the mobile terminal 30 operates in the same manner as the controller 201 of the television 20. A transmission controller 3011, a reception controller 3012, and a display controller 3013 of the mobile terminal 30 operate in the same manner as the transmission controller 2011, the reception controller 2012, and the display controller 2013 of the television 20, respectively.

Next, an example of the test script 1022 will be explained hereinafter. The test script 1022 described hereinafter is an example, and the embodiment is not limited to it.

A first example of the test script 1022 will be explained hereinafter. The test script 1022 serving as the first example is a script for checking by the controller 101 whether the relevant button object is disposed in the right place, when the user clicks the button object. The button object mentioned here is an example, and another object such as a div (division) element may be used.

The controller 101 executes the following processing based on the test script 1022: (1) the controller 101 obtains position information of a position in which the relevant button object is disposed, with the click event of the button object used as a key; (2) the controller 101 compares position information of the position in which the button object is actually disposed with position information of the position in which the button object should be disposed; and (3) the controller 101 determines that the screen display is distorted, if the controller 101 determines that the position information items are different from each other, as a result of the above comparison.

A second example of the test script 1022 will be explained hereinafter. The test script 1022 serving as the second example is a script configured to obtain position information items of at least two div elements which should be aligned side by side and check whether the div elements are arranged in right places.

The controller 101 executes the following processing based on the test script 1022: (1) the controller 101 executes the test script 1022 after HTML drawing; (2) the controller 101 checks whether the position information items of the div elements indicate aligned positions; (3) the controller 101 determines that the screen display is distorted, when the div elements have different x axes.

FIGS. 5A and 5B are diagrams of pictures in electronic apparatuses having different screen sizes. FIGS. 5A and 5B show examples in which the same application 1021 is displayed in different ways on the screens of the different electronic apparatuses. FIG. 5A illustrates a screen of one electronic apparatus in which the application 1021 is normally displayed. Button objects 1 to 4 have the same x axis and are normally drawn. FIG. 5B illustrates a screen, which is smaller than the screen illustrated in FIG. 5A, of the other electronic apparatus, in which the application 1021 is not normally displayed. The button object 4 is drawn with an x axis which is different from an x axis of button objects 1 to 3, unlike the example illustrated in FIG. 5A.

According to the present embodiment, the information distribution apparatus 10 can detect and collect errors as illustrated in FIG. 5B, which are caused by difference in type of the electronic apparatus, in early stages only by embedding the test script 1022 in the application 1021, without letting the user aware of the errors (without user's voluntary report).

In addition, it is unnecessary for the information distribution apparatus 10 to transmit the test script to electronic apparatuses of the same type. In other words, the information distribution apparatus 10 has only to transmit the application 1021, in which the test script 1022 is embedded, to electronic apparatuses which are not included in the error device list 1023. Therefore, the information distribution apparatus 10 does not receive known error information from a plurality of electronic apparatuses, and thus the load of receiving error information can be reduced. Besides, the information distribution apparatus 10 can identify trouble parts relating to distortion of screen display in early stages, and can cope with distortion of screen display (correct the application 1021) in early stages.

## Claims

1. An information distribution apparatus **characterized by** comprising:
a receiver (1051) configured to receive a request for an application from an electronic apparatus (30);
an obtaining module (1012) configured to obtain identification information of the electronic apparatus (30) from the request;
a determination module (1013) configured to determine whether the identification information of the electronic apparatus (30) is included in a list;
a transmitter (1052) configured to transmit the application, in which a test script configured to detect distortion of screen display of the application is not embedded, to the electronic apparatus (30), if the identification information of the electronic apparatus (30) is included in the list.

2. The apparatus of Claim 1, **characterized by** further comprising:
a memory (102) configured to store the list which registers identification information of a device in which screen display of the application is distorted.

3. The apparatus of Claim 2, **characterized in that**
the transmitter (1052) is configured to transmit the application, in which the test script is embedded, to the electronic apparatus (30), if the identification information of the electronic apparatus (30) is not included in the list.

4. The apparatus of Claim 3, **characterized by** further comprising:
a receiver (1051) configured to receive error information based on the test script from the electronic apparatus (30).

5. The apparatus of Claim 4, **characterized by** further comprising:
an update module (1015) configured to add the identification information of the electronic apparatus (30) included in the error information to the list.

6. The apparatus of Claim 5, **characterized in that**
the error information includes information relating to distortion of screen display of the application.

7. The apparatus of Claim 6, **characterized in that**
the memory (102) stores the information relating to the distortion of the screen display of the application.

8. An information distribution system **characterized by** comprising:
an electronic apparatus (30) comprising:
a first transmitter (3082) configured to transmit a request for an application; and
an information distribution apparatus (10), comprising:
a receiver (1051) configured to receive a request for an application from the electronic apparatus (30);
an obtaining module (1012) configured to obtain identification information of the electronic apparatus (30) from the request;
a determination module (1013) configured to determine whether the identification information of the electronic apparatus (30) is included in a list; and
a second transmitter (1052) configured to transmit the application, in which a test script configured to detect distortion of screen display of the application is not embedded, to the electronic apparatus, if the identification information of the electronic apparatus (30) is included in the list.

9. An information distribution method, **characterized by** comprising:
receiving a request for an application from an electronic apparatus (30);
obtaining identification information of the electronic apparatus (30) from the request;
determining whether the identification information of the electronic apparatus (30) is included in a list; and
transmitting the application, in which a test script configured to detect distortion of screen display of the application is not embedded, to the electronic apparatus (30), if the identification information of the electronic apparatus (30) is included in the list.
